# EUROPÄISCHE PATENTSCHRIFT

(11) **EP 3 853 752 B1**
(45) Veröffentlichungstag und Bekanntmachung des Hinweises auf die Patenterteilung: **08.06.2022**
(21) Anmeldenummer: 19794981.1
(22) Anmeldetag: 25.10.2019
(51) Int. Cl.: H04W 12/0431, H04W 12/069, G06F 21/41

(54) **AUTHENTIFIZIEREN EINES NUTZERS EINER SOFTWAREAPPLIKATION**
AUTHENTICATION OF A USER OF A SOFTWARE APPLICATION
AUTHENTIFICATION D'UN UTILISATEUR D'UNE APPLICATION LOGICIELLE

(30) Priorität: 15.11.2018 DE 102018219570
(43) Veröffentlichungstag der Anmeldung: 28.07.2021
(73) Patentinhaber: Audi AG, 85045 Ingolstadt (DE)
(72) Erfinder: PLECHINGER, Jörg, 80469 München (DE); HEHN, Thorsten, 85055 Ingolstadt (DE)
(86) Internationale Anmeldenummer: PCT/EP2019/079119
(87) Internationale Veröffentlichungsnummer: WO 2020/099097

(56) Entgegenhaltungen:
- US-A1- 2006 020 791
- US-B1- 8 195 819
- "3rd Generation Partnership Project; Technical Specification Group Services and System Aspects; Generic Authentication Architecture (GAA); Generic bootstrapping architecture (Release 8)", 3GPP STANDARD; 3GPP TS 33.220, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V8.0.0, 1. Juni 2007 (2007-06-01), Seiten 1-77, XP050376709,
- "3rd Generation Partnership Project; Technical Specification Group Services and System Aspects; Generic Authentication Architecture (GAA); Access to network application functions using Hypertext Transfer Protocol over Transport Layer Security (HTTPS) (Release 8)", 3GPP STANDARD; 33222-800, 3RD GENERATION PARTNERSHIP PROJECT (3GPP)?, MOBILE COMPETENCE CENTRE ; 650, ROUTE DES LUCIOLES ; F-06921 SOPHIA-ANTIPOLIS CEDEX ; FRANCE , 17. Juni 2008 (2008-06-17), XP050911463, Gefunden im Internet: URL:http://www.3gpp.org/ftp/Specs/2014-12/ Rel-8/33_series/ [gefunden am 2008-06-17]
- "3rd Generation Partnership Project; Technical Specification Group Services and System Aspects; Liberty Alliance and 3GPP security interworking; Interworking of Liberty Alliance Identity Federation Framework (ID-FF), Identity Web Services Framework (ID-WSF) and Generic Authentication Architecture (GA", 3GPP STANDARD; 33980-800, 3RD GENERATION PARTNERSHIP PROJECT (3GPP)?, MOBILE COMPETENCE CENTRE ; 650, ROUTE DES LUCIOLES ; F-06921 SOPHIA-ANTIPOLIS CEDEX ; FRANCE , 21. Dezember 2008 (2008-12-21), XP050911473, Gefunden im Internet: URL:http://www.3gpp.org/ftp/Specs/2014-12/ Rel-8/33_series/ [gefunden am 2008-12-21]

## Beschreibung

Die Erfindung betrifft ein Verfahren zum Authentifizieren eines Nutzers mit den Schritten: Übermitteln einer von einem Authentifikationsmittel bereitgestellten Netzwerkauthentifikation eines Nutzers von einem mobilen Endgerät des Nutzers an einen Backendserver eines authentifizierungspflichtigen Drahtlosnetzwerks, Verbinden des mobilen Endgeräts mit dem Drahtlosnetzwerk, Starten einer gegenüber einem über das Drahtlosnetzwerk zugänglichen Applikationsserver authentifizierungspflichtigen Softwareapplikation auf dem mobilen Endgerät durch den Nutzer und Übermitteln einer der gestarteten Softwareapplikation zugeordneten Applikationsauthentifikation des Nutzers zu dem Applikationsserver. Ferner betrifft die Erfindung ein System zum Authentifizieren eines Nutzers.

Mittels eines mit einem Drahtlosnetzwerk verbundenen mobilen Endgeräts kann eine Person, im Folgenden als Nutzer bezeichnet, auf Ressourcen des Drahtlosnetzwerks zugreifen. Zu den Ressourcen des Drahtlosnetzwerks gehören üblicherweise mehrere Applikationsserver, welche über das Drahtlosnetzwerk zugänglich sind und deren Leistungen jeweils mittels einer auf dem mobilen Endgerät ausgeführten Softwareapplikation abgerufen werden können. Für eine derartige auf dem mobilen Endgerät ausgeführte Softwareapplikation ist auch der Begriff Client gebräuchlich. Die Softwareapplikation und der Applikationsserver sind dann Komponenten einer sogenannten Client-Server-Architektur. Jedoch ist die Erfindung auf einer Applikationsebene nicht auf Client-Server-Architekturen beschränkt. Sowohl beim Verbinden des mobilen Endgeräts mit dem Drahtlosnetzwerk als auch beim Zugreifen der Softwareapplikation auf den Applikationsserver muss jeweils der Nutzer authentifiziert werden. Authentifizierungsverfahren stellen sicher, dass ein Nutzer authentisch ist, d. h. die vermeintliche Identität auch tatsächlich hat. Ein Autorisierungsverfahren gewährleistet darüber hinaus, dass ein authentifizierter Nutzer über eine erforderliche Berechtigung verfügt.

Speziell für HTTP-Applikationsserver existiert ein Authentifkationsverfahren, welches auf einem 3GPP-Standard beruht und beispielsweise in WO 2010/128348 A1 beschrieben ist. Bei diesem Verfahren wird von einem Backendserver für einen Nutzer eines mobilen Endgeräts automatisch ein Schlüsselpaar (Credentials) generiert, gespeichert und bei Bedarf zu einem Applikationsserver übermittelt. Der Applikationsserver verwendet das Schlüsselpaar zum Authentifizieren des Nutzers.

Auf der Applikationsebene weit verbreitete Authentifizierungsverfahren beruhen auf Zugangsdaten, welche ebenfalls als Credentials bezeichnet werden. Gewöhnlich umfassen Zugangsdaten einen Nutzernamen und ein Kennwort, welche innerhalb bestimmter Grenzen, beispielsweise innerhalb eines vorbestimmten Namensraums für eindeutige Benutzernamen und/oder oberhalb einer vorbestimmten Mindestsicherheit von Kennwörtern, von dem Nutzer zumeist frei wählbar sind.

Bei einem Verbinden des mobilen Endgeräts mit dem Drahtlosnetzwerk erfolgt ein erstes Authentifizieren des Nutzers des mobilen Endgeräts gegenüber einem Backendserver des Drahtlosnetzwerks.

Die WO 2018/015200 A1 offenbart ein Verfahren zum Autorisieren eines V2X (Vehicle-to-Everything)-Endgeräts eines Fahrzeugs für ein Verbinden mit einem Drahtlosnetzwerk für eine V2X-Kommunikation. Bei dem Verfahren übermittelt das V2X-Endgerät des Fahrzeugs einen Autorisierungsnachweis, welcher für ein zur V2X-Kommunikation berechtigtes V2X-Endgerät von einer vertrauenswürdigen Verkehrsbehörde bereitgestellt wird, an einen Backendserver des Drahtlosnetzwerks.

Bei einem Zugreifen der Softwareapplikation auf den Applikationsserver über das Drahtlosnetzwerk erfolgt ein zweites Authentifizieren des Nutzers gegenüber dem Applikationsserver.

Viele Nutzer verwenden aus Bequemlichkeit dieselbe Applikationsauthentifikation für unterschiedliche Softwareapplikationen oder notieren sich verschiedene Applikationsauthentifikationen auf unsichere Weise, beispielsweise durch Speichern auf dem mobilen Endgerät. Infolgedessen besteht eine relativ große Gefahr, dass eine Applikationsauthentifikation in unbefugte Hände gelangt und missbraucht wird. Deshalb besteht ein Bedarf, Authentifizierungsverfahren abzusichern und hinsichtlich der Handhabung für den Nutzer zu vereinfachen.

Ein solches Verfahren zum Authentifizieren eines Nutzers offenbart die DE 10 2014 013 753 A1. Bei dem Verfahren wird eine mittels eines privaten Schlüssels des Nutzers von einem mobilen Endgerät des Nutzers erzeugte Signatur mit einer von einer authentifizierungspflichtigen Softwareapplikation bereitgestellten Kennung und einer Referenz zu einem zu dem privaten Schlüssel korrespondierenden öffentlichen Schlüssel an die Softwareapplikation übermittelt. Die Softwareapplikation entschlüsselt die Signatur und gestattet dem Nutzer ihre Nutzung, wenn die Signatur die bereitgestellte Kennung umfasst.

Ein weiteres Problem von Authentifizierungsverfahren wird erkennbar, wenn ein Nutzer eine Mehrzahl von mobilen Endgeräten nutzt, um auf jedem mobilen Endgerät eine gegenüber dem Applikationsserver authentifizierungspflichtige Softwareapplikation auszuführen. In einen solchen Fall muss die der Softwareapplikation zugeordnete Applikationsauthentifikation nämlich von jedem mobilen Endgerät, auf dem die Softwareapplikation ausgeführt wird, separat zu dem Applikationsserver übermittelt werden.

Dieses Problem wird durch das von der DE 10 2012 0101 559 offenbarte Verfahren zum Authentifizieren eines Nutzers vermieden. Bei dem Verfahren wird dem Nutzer von dem Applikationsserver ein universeller, d. h. für jedes mobile Endgerät, gültiger Hyperlink in Form eines QR-Codes zur Verfügung gestellt, der zu jeder authentifizierungspflichtigen Softwareapplikation des Nutzers führt und eine der jeweiligen Softwareapplikation zugeordnete Applikationsauthentifikation des Nutzers umfasst. Wenn der Nutzer dem Hyperlink folgt, werden die authentifizierungspflichtige Softwareapplikation gestartet und die Applikationsauthentifikation automatisch durchgeführt. Allerdings sind die beiden letztgenannten Authentifizierungsverfahren aufgrund der Verschlüsselung oder des QR-Codes technisch relativ komplex. Die technische Spezifikation 3GPP TS 33.220 V8.0.0 aus Juni 2007 offenbart ein weiteres Verfahren zum Authentifizieren eines Nutzers, bei dem ein Backendserver eines Drahtlosnetzwerks eine einem Nutzer und einer authentisierungspflichtigen Softwareapplikation zugeordnete Applikationsauthentifikation des Nutzers zu einem Applikationsserver übermittelt, wenn die Softwareapplikation auf einem mobilen Endgerät des Nutzers gestartet wird.

Der Erfindung liegt daher die Aufgabe zugrunde, ein einfaches und sicheres Verfahren zum Authentifizieren eines Nutzers anzugeben.

Darüber hinaus ist es Aufgabe der Erfindung, ein System zum Authentifizieren eines Nutzers anzugeben. Ein Gegenstand der Erfindung ist ein Verfahren zum Authentifizieren eines Nutzers, umfassend die Schritte: Ubermitteln einer von einem Authentifikationsmittel bereitgestellten Netzwerkauthentifikation eines Nutzers von einem mobilen Endgerat des Nutzers an einen Backendserver eines authentifizierungspflichtigen Drahtlosnetzwerks, Verbinden des mobilen Endgerats mit dem Drahtlosnetzwerk, Starten einer gegenüber einem über das Drahtlosnetzwerk zugänglichen Applikationsserver authentifizierungspflichtigen Softwareapplikation auf dem mobilen Endgerät durch den Nutzer und Übermitteln einer der gestarteten Softwareapplikation zugeordneten Applikationsauthentifikation des Nutzers zu dem Applikationsserver. Der Nutzer nutzt mit einem mobilen Endgerät über ein Drahtlosnetzwerk eine Softwareapplikation, welche von einem Applikationsserver bereitgestellt wird.

Unter einem mobilen Endgerät kann jedes Gerät mit einer Kommunikationsschnittelle und einer auf dem mobilen Endgerät ausführbaren Softwareapplikation verstanden werden, welches über die Kommunikationsschnittstelle mit dem Drahtlosnetzwerk verbunden werden kann und bei dem die Softwareapplikation den Nutzer gegenüber dem Applikationsserver authentifizieren muss, um auf den Applikationsserver zuzugreifen, beispielsweise ein Smartphone, ein Tablet, ein Notebook, aber auch ein stationärer Rechner oder ein Fahrzeug jeweils mit einer entsprechenden Kommunikationsschnittstelle.

Nicht einschränkende Beispiele für derartige Softwareapplikationen sind sämtliche auf einer Client-Server-Architektur beruhenden Systeme wie WhatsApp und dergleichen. Das Drahtlosnetzwerk kann ein flächendeckendes Mobilfunknetz oder ein regional beschränktes Funknetz eines privaten Betreibers sein. Die für ein Zugreifen auf den Applikationsserver benötigte Applikationsauthentifikation kann sogenannte Zugangsdaten, d. h. einen Nutzernamen und ein Kennwort, umfassen, welche der Nutzer unter Meidung von Namenskonflikten üblicherweise frei wählt.

Der Backendserver des Drahtlosnetzwerks speichert Netzwerkauthentifkationen sämtlicher zum Verbinden mit dem Drahtlosnetzwerk autorisierter Nutzer und erlaubt deren Zugriff auf das Drahtlosnetzwerk anhand der gespeicherten Netzwerkauthentifikationen.

Es versteht sich, dass das Starten einer Softwareinstallation auch ein initiales Herunterladen einer Softwareapplikation von einem authentifizierungspflichtigen Applikationsserver oder Downloadserver, wie beispielsweise PlayStore oder iStore, und Installieren der heruntergeladenen Softwareinstallation auf dem mobilen Endgerät umfasst.

Bei dem erfindungsgemäßen Verfahren wird eine auf dem Backendserver gespeicherte Applikationsauthentifikation des Nutzers von dem Backendserver des Drahtlosnetzwerks zu dem Applikationsserver übermittelt. Mit anderen Worten authentifiziert der Backendserver den Nutzer der Softwareapplikation gegenüber dem Applikationsserver. Dadurch wird der Nutzer von einem Übermitteln einer Applikationsauthentifikation zu dem Applikationsserver entlastet, wenn er die Softwareapplikation zum Verwenden startet. Einerseits ist dadurch eine Nutzung der Softwareapplikation erleichtert und ein Zeitaufwand bis zu der Nutzung verringert. Andererseits muss der Nutzer sich die gewählten Zugangsdaten nicht merken oder notieren, wodurch der Umgang mit mehreren unterschiedlichen Zugangsdaten für jeweils verschiedene Softwareapplikationen erleichtert ist. Dank der zentralen Speicherung der Applikationsauthentifikation kann der Nutzer ohne Mehraufwand mehrere unterschiedliche mobile Endgeräte mit dem Drahtlosnetzwerk verbinden und wird unabhängig von dem jeweils genutzten mobilen Endgerät stets von dem Backendserver des Drahtlosnetzwerks gegenüber dem Applikationsserver authentifiziert.

In einer bevorzugten Ausführungsform wird als das Authentifikationsmittel eine in das mobile Endgerät eingesetzte und einem Kommunikationsmodul des mobilen Endgeräts zugeordnete SIM-Karte des Drahtlosnetzwerks oder ein an das mobile Endgerät angeschlossenes und dem Kommunikationsmodul des mobilen Endgeräts zugeordnetes Hardwaresicherheitsmodul des Drahtlosnetzwerks als das Authentifikationsmittel verwendet. SIM-Karten und Hardwaresicherheitsmodule (HSM) sind weit verbreitete Vorrichtungen für ein Authentifizieren eines Nutzers gegenüber dem Backendserver des Drahtlosnetzwerks und eignen sich daher als Authentifikationsmittel für das erfindungsgemäße Verfahren in besonderer Weise.

Erfindungsgemäß übermittelt nach dem Starten der Softwareapplikation der Applikationsserver eine Authentifizierungsanforderung zu der gestarteten Softwareapplikation und leitet die gestartete Softwareapplikation die Authentifizierungsanforderung an den Backendserver weiter. Mit anderen Worten antwortet die Softwareapplikation auf die Authentifizierungsanforderung nicht mit einem Übermitteln der Applikationsauthentifikation zu dem Applikationsserver. Stattdessen schaltet die Softwareapplikation den Backendserver des Drahtlosnetzwerks ein, indem sie ihm die Authentifizierungsanforderung weiterleitet. Dies impliziert allerdings nicht, dass die weitergeleitete Authentifizierungsanforderung identisch zu der von dem Applikationsserver übermittelten Authentifizierungsanforderung ist. Vielmehr kann erstere von letzterer abweichen. Allerdings muss die weitergeleitete Authentifizierungsanforderung einen Kennzeichner für die gestartete Softwareapplikation umfassen, anhand dessen der Backendserver die der Softwareapplikation zugeordnete Applikationsauthentifikation auswählen kann.

Weiterhin erfindungsgemäß übermittelt der Backendserver eine Authentifizierungsanforderung zu der gestarteten Softwareapplikation und übermittelt die gestartete Softwareapplikation die Netzwerkauthentifikation des Nutzers zu dem Backendserver. Der Backendserver reagiert auf die weitergeleitete Authentifikationsanforderung mit einer Authentifizierungsanforderung, mit welcher er von der Softwareapplikation die Netzwerkauthentifikation des Nutzers anfordert. Anhand der Netzwerkauthentifikation, welche dem Backendserver von der Softwareapplikation übermittelt wird, stellt der Backendserver fest, von welchem mobilen Endgerät welches Nutzers die Authentifizierungsanforderung der Softwareapplikation an ihn weitergeleitet wurde.

In weiteren Ausführungsformen fragt die gestartete Softwareapplikation die Netzwerkauthentifikation des Nutzers von dem Authentifikationsmittel ab und liefert das Authentifikationsmittel die Netzwerkauthentifikation des Nutzers. Um auf die Authentifikationsanforderung des Backendservers die Netzwerkauthentifikation zu dem Backendserver übermitteln zu können, greift die Softwareapplikation auf das Kommunikationsmodul des mobilen Endgeräts zu, welchem das Authentifikationsmittel zugeordnet ist. Auf diese Weise erhält die Softwareapplikation von dem Kommunikationsmodul die Netzwerkauthentifikation des Nutzers, um diese an den Backendserver zu übermitteln.

In einer bevorzugten Ausführungsform verwaltet der Backendserver die der gestarteten Softwareapplikation zugeordnete Applikationsauthentifikation des Nutzers in einem Credential-Management-System und autorisiert der Nutzer den Backendserver einmalig, die Applikationsauthentifikation zu dem Backendserver zu übermitteln. Die erforderliche einmalige Autorisierung durch den Nutzer überlässt dem Nutzer die Wahl, ob er an dem erfindungsgemäßen Verfahren teilnehmen möchte. Das Credential-In einer bevorzugten Ausführungsform verwaltet der Backendserver die der gestarteten Softwareapplikation zugeordnete Applikationsauthentifikation des Nutzers in einem Credential-Management-System und autorisiert der Nutzer den Backendserver einmalig, die Applikationsauthentifikation zu dem Applikationsserver zu übermitteln. Die erforderliche einmalige Autorisierung durch den Nutzer überlässt dem Nutzer die Wahl, ob er an dem erfindungsgemäßen Verfahren teilnehmen möchte. Das Credential-Management-System ist konfiguriert, eine Mehrzahl von Applikationsauthentifikationen und Netzwerkauthentifikationen von einer Mehrzahl von Nutzern für eine Mehrzahl von Softwareapplikationen zu verwalten.

Auf einem mobilen Endgerät mit einem Authentifikationsmittel, zu dessen Netzwerkauthentifikation der Backendserver keine der gestarteten Softwareapplikation zugeordnete Applikationsauthentifikation speichert, kann die gestartete Softwareapplikation nicht gestartet werden. Mit anderen Worten ist ein Starten der authentifizierungspflichtigen Softwareapplikation ausgeschlossen, wenn eine Applikationsauthentifikation für den Nutzer, welchem die Netzwerkauthentifikation zugeordnet ist, von dem Backendserver nicht ermittelbar ist.

Auf diese Weise wird für ein von mehreren Nutzern nacheinander genutztes mobiles Endgerät, beispielsweise ein Fahrzeug einer Carsharing-Flotte, erreicht, dass die von einem Nutzer jeweils nutzbaren Softwareapplikationen von dem jeweils dem mobilen Endgerät zugeordneten Authentifikationsmittel abhängen. Durch Austauschen des Authentifikationsmittels kann ein Nutzen einer Softwareapplikation ermöglicht oder ausgeschlossen werden.

Gegenstand der Erfindung ist auch ein System zum Authentifizieren eines Nutzers, welches ein Drahtlosnetzwerk, zumindest einen authentifizierungspflichtigen Applikationsserver, einen Backendserver des Drahtlosnetzwerks, und zumindest ein mit dem Drahtlosnetzwerk verbindbares mobiles Endgerät mit einem Kommunikationsmodul, einer Bei dem erfindungsgemäßen System ist eine der zumindest einen authentifizierungspflichtigen Softwareapplikation zugeordnete Applikationsauthentifikation des Nutzers auf dem Backendserver des Drahtlosnetzwerks gespeichert. Ein wesentlicher Aspekt ist demnach eine zentrale Speicherung der Applikationsauthentifikation. Entsprechend kann der Backendserver anstelle der Softwareapplikation eine beim Starten der Softwareapplikation erforderliche Applikationsauthentifikation an den Applikationsserver übermitteln.

In bevorzugten Ausführungsformen ist das Authentifikationsmittel dem Kommunikationsmodul zugeordnet und umfasst eine in das mobile Endgerät eingesetzte SIM-Karte des Drahtlosnetzwerks oder ein mit dem mobilen Endgerät verbundenes Hardwaresicherheitsmodul des Drahtlosnetzwerks. SIM-Karten und Hardwaresicherheitsmodule (HSM) sind bewährte Authentifikationsmittel für mobile Endgeräte, welche für flächendeckende Mobilfunknetze bzw. für regional beschränkte private Funknetze.

In besonders bevorzugten Ausführungsformen umfasst der Backendserver ein Credential-Management-System und ist die Applikationsauthentifikation in dem Credential-Management-System gespeichert. Das Credential-Management-System ist konfiguriert, eine Mehrzahl von Applikationsauthentifikationen und Netzwerkauthentifikationen von einer Mehrzahl von Nutzern für eine Mehrzahl von Softwareapplikationen zu verwalten. Das Credential-Management-System ist daher ein besonders geeignetes Werkzeug für einen Backendserver eines Drahtlosnetzwerks.

Erfindungsgemäß ist das System konfiguriert, ein erfindungsgemäßes Verfahren zum Authentifizieren des Nutzers durchzuführen. Das erfindungsgemäße Verfahren erleichtert dem Nutzer die Handhabung einer Mehrzahl authentifizierungsplichtiger Softwareapplikationen mit einer Mehrzahl von mobilen Endgeräten.

Ein wesentlicher Vorteil des erfindungsgemäßen Verfahrens besteht darin, dass ein Nutzen einer auf einen authentifizierungspflichtigen In weiteren Ausführungsformen ist das System konfiguriert, ein erfindungsgemäßes Verfahren zum Authentifizieren des Nutzers durchzuführen. Das erfindungsgemäße Verfahren erleichtert dem Nutzer die Handhabung einer Mehrzahl authentifizierungsplichtiger Softwareapplikationen mit einer Mehrzahl von mobilen Endgeräten.

Ein wesentlicher Vorteil des erfindungsgemäßen Verfahrens besteht darin, dass ein Nutzen einer auf einen authentifizierungspflichtigen Applikationsserver zugreifenden Softwareapplikation von einer Mehrzahl von mobilen Endgeräten aus erleichtert ist. Als ein weiterer Vorteil ist anzusehen, dass für ein Ausführen des Verfahrens eine sichere und daher vertrauenswürdige Infrastruktur eines Drahtlosnetzwerks verwendet wird. Zudem ist vorteilhaft, dass ein mobiles Endgerät ohne einen Authentifizierungskonflikt nacheinander von mehreren Nutzern genutzt werden kann.

Die Erfindung ist anhand einer Ausführungsform in den Zeichnungen schematisch dargestellt und wird unter Bezugnahme auf die Zeichnungen weiter beschrieben. Es zeigt:
- Figur 1: in einer schematischen Darstellung ein Diagramm eines Systems und Verfahrens zum Authentifizieren eines Nutzers nach dem Stand der Technik;
- Figur 2: in einer schematischen Darstellung ein Diagramm eines Systems und Verfahrens zum Authentifizieren eines Nutzers nach einer Ausführungsform der vorliegenden Erfindung.

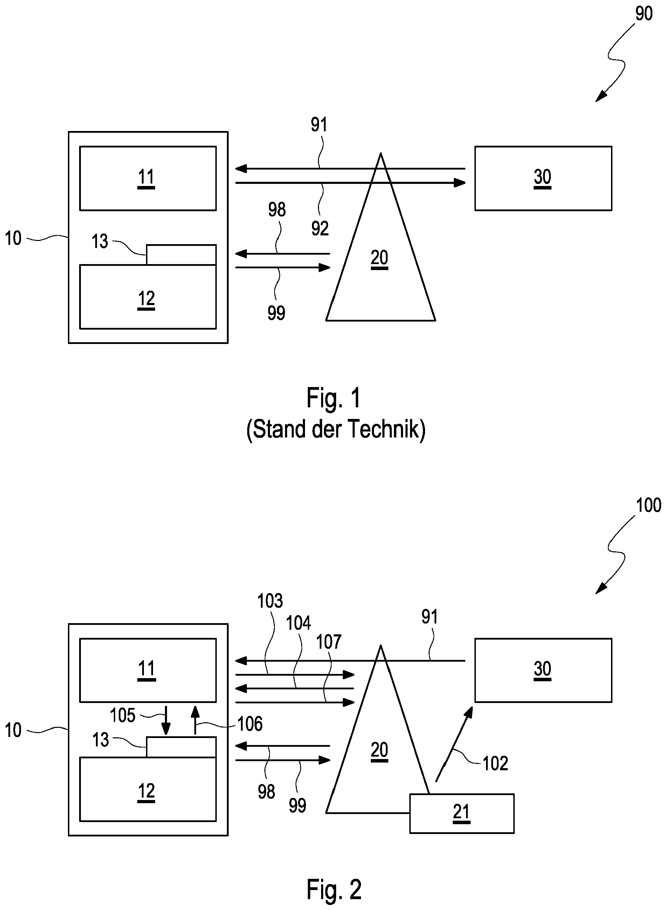

Figur 1 zeigt in einer schematischen Darstellung ein Diagramm eines Systems und Verfahrens zum Authentifizieren eines Nutzers nach dem Stand der Technik. Das System umfasst ein Drahtlosnetzwerk, zumindest einen über das Drahtlosnetzwerk zugänglichen authentifizierungspflichtigen Applikationsserver 30, einen Backendserver 20 des Drahtlosnetzwerks, und zumindest ein mit dem Drahtlosnetzwerk verbindbares mobiles Endgerät 10.

Das mobile Endgerät 10 umfasst eine gegenüber dem Applikationsserver 30 authentifizierungspflichtige Softwareapplikation 11, ein Kommunikationsmodul 12 und ein eine Netzwerkauthentifikation eines Nutzers bereitstellendes Authentifikationsmittel 13. Das Authentifikationsmittel 13 ist dem Kommunikationsmodul 12 zugeordnet und umfasst eine in das mobile Endgerät 10 eingesetzte SIM (Subscriber Identity Module)-Karte des Drahtlosnetzwerks oder ein mit dem mobilen Endgerät 10 verbundenes Hardwaresicherheitsmodul (HSM) des Drahtlosnetzwerks.

Zum Authentifizieren des Nutzers gegenüber dem Applikationsserver 30 übermittelt 98 zunächst der Backendserver 20 eine Authentifikationsanforderung an das mobile Endgerät 10. Daraufhin übermittelt 99 zunächst das mobile Endgerät 10 des Nutzers eine von dem Authentifikationsmittel 13 bereitgestellte Netzwerkauthentifikation des Nutzers an den Backendserver 20 des authentifizierungspflichtigen Drahtlosnetzwerks. Wenn die übermittelte Netzwerkauthentifikation gültig ist, wird das mobile Endgeräts 10 mit dem Drahtlosnetzwerk verbunden.

In einem weiteren Schritt startet der Nutzer eine gegenüber dem über das Drahtlosnetzwerk zugänglichen Applikationsserver 30 authentifizierungspflichtige Softwareapplikation 11 auf dem mobilen Endgerät 10. Nach dem Starten der Softwareapplikation 11 übermittelt 91 der Applikationsserver 30 eine Authentifikationsanforderung zu der gestarteten Softwareapplikation 11. Daraufhin übermittelt 92 die Softwareapplikation 11 eine der gestarteten Softwareapplikation 11 zugeordnete Applikationsauthentifikation des Nutzers zu dem Applikationsserver 30. Bei der Applikationsauthentifikation handelt es sich um Zugangsdaten, d. h. einen Nutzernamen und ein Kennwort, zu deren Eingabe der Nutzer beim Starten der Softwareapplikation 11 auf die Authentifikationsanforderung des Applikationsservers 30 hin aufgefordert wird.

Figur 2 zeigt in einer schematischen Darstellung ein Diagramm eines Systems 1 und Verfahrens 100 zum Authentifizieren eines Nutzers nach einer Ausführungsform der vorliegenden Erfindung. Das System 1 umfasst ein Drahtlosnetzwerk, zumindest einen über das Drahtlosnetzwerk zugänglichen authentifizierungspflichtigen Applikationsserver 30, einen Backendserver 20 des Drahtlosnetzwerks, und zumindest ein mit dem Drahtlosnetzwerk verbindbares mobiles Endgerät 10.

Das mobile Endgerät 10 umfasst eine gegenüber dem Applikationsserver 30 authentifizierungspflichtige Softwareapplikation 11, ein Kommunikationsmodul 12 und ein eine Netzwerkauthentifikation eines Nutzers bereitstellendes Authentifikationsmittel 13. Das Authentifikationsmittel 13 ist dem Kommunikationsmodul 12 zugeordnet und umfasst eine in das mobile Endgerät 10 eingesetzte SIM (Subscriber Identity Module)-Karte des Drahtlosnetzwerks oder ein mit dem mobilen Endgerät 10 verbundenes Hardwaresicherheitsmodul (HSM) des Drahtlosnetzwerks.

Eine der zumindest einen authentifizierungspflichtigen Softwareapplikation 11 zugeordnete Applikationsauthentifikation des Nutzers ist auf dem Backendserver des Drahtlosnetzwerks gespeichert. Dazu umfasst der Backendserver 20 ein Credential-Management-System 21, und die Applikationsauthentifikation ist in dem Credential-Management-System 21 gespeichert.

Das System 1 ist konfiguriert, das nachfolgend beschriebene Verfahren 100 zum Authentifizieren des Nutzers durchzuführen.

Zunächst übermittelt 98 der Backendserver 20 eine Authentifikationsanforderung an das mobile Endgerät 10. Daraufhin übermittelt 99 das mobile Endgerät 10 des Nutzers eine von dem Authentifikationsmittel 13 bereitgestellte Netzwerkauthentifikation des Nutzers an den Backendserver 20 des authentifizierungspflichtigen Drahtlosnetzwerks. Als das Authentifikationsmittel 13 wird die in das mobile Endgerät 10 eingesetzte und dem Kommunikationsmodul 12 des mobilen Endgeräts 10 zugeordnete SIM-Karte des Drahtlosnetzwerks oder das an das mobile Endgerät 10 angeschlossene und dem Kommunikationsmodul 12 des mobilen Endgeräts 10 zugeordnete Hardwaresicherheitsmodul (HSM) des Drahtlosnetzwerks verwendet. Wenn die übermittelte Netzwerkauthentifikation gültig ist, wird das mobile Endgeräts 10 mit dem Drahtlosnetzwerk verbunden.

Der Backendserver 20 verwaltet eine der gestarteten Softwareapplikation 11 zugeordnete Applikationsauthentifikation des Nutzers in einem Credential-Management-System 21 und wird von dem Nutzer einmalig autorisiert, die Applikationsauthentifikation zu dem Backendserver 20 zu übermitteln 102.

Dann startet der Nutzer eine gegenüber dem über das Drahtlosnetzwerk zugänglichen Applikationsserver 30 authentifizierungspflichtige Softwareapplikation 11 auf dem mobilen Endgerät 10. Nach dem Starten der Softwareapplikation 11 übermittelt 91 der Applikationsserver 30 eine Authentifikationsanforderung zu der gestarteten Softwareapplikation 11. Die gestartete Softwareapplikation 11 leitet die Authentifizierungsanforderung an den Backendserver 20 weiter 103.

Daraufhin übermittelt 104 der Backendserver 20 eine Authentifizierungsanforderung zu der gestarteten Softwareapplikation 11. Die gestartete Softwareapplikation 11 fragt 105 die Netzwerkauthentifikation des Nutzers von dem Authentifikationsmittel 13 ab und liefert 106 die Netzwerkauthentifikation des Nutzers an die gestartete Softwareapplikation 11 zurück. Die gestartete Softwareapplikation 11 übermittelt 107 in der Folge die Netzwerkauthentifikation des Nutzers zu dem Backendserver 20.

Schließlich übermittelt 102 der Backendserver 30 die der gestarteten Softwareapplikation 11 zugeordnete und auf dem Backendserver 30 in dem Credential-Management-System gespeicherte Applikationsauthentifikation des Nutzers zu dem Applikationsserver 30. Bei der Applikationsauthentifikation kann es sich um Zugangsdaten, d. h. einen Nutzernamen und ein Kennwort, handeln.

### BEZUGSZEICHENLISTE:

- 1: System
- 10: Endgerät
- 11: Softwareapplikation
- 12: Kommunikationsmodul
- 13: Authentifikationsmittel
- 20: Backendserver
- 21: Credential-Management-System
- 30: Applikationsserver
- 90: Authentifizierungsverfahren
- 91: Übermitteln einer Authentifikationsanforderung
- 92: Übermitteln der Applikationsauthentifikation
- 98: Übermitteln einer Authentifikationsanforderung
- 99: Übermitteln der Netzwerkauthentifikation
- 100: Verfahren zum Authentifizieren
- 101: Übermitteln einer Authentifikationsanforderung
- 102: Übermitteln der Applikationsauthentifikation
- 103: Weiterleiten der Authentifikationsanforderung
- 104: Übermitteln einer Authentifikationsanforderung
- 105: Abfragen der Netzwerkauthentifikation
- 106: Liefern der Netzwerkauthentifikation
- 107: Übermitteln der Netzwerkauthentifikation

## Patentansprüche

1. Verfahren (100) zum Authentifizieren eines Nutzers, umfassend die Schritte:
- Übermitteln (99) einer von einem Authentifikationsmittel (13) bereitgestellten Netzwerkauthentifikation eines Nutzers von einem mobilen Endgerät (10) des Nutzers an einen Backendserver (20) eines authentifizierungspflichtigen Drahtlosnetzwerks;
- Verbinden des mobilen Endgeräts (10) mit dem Drahtlosnetzwerk;
- Starten einer gegenüber einem über das Drahtlosnetzwerk zugänglichen Applikationsserver (30) authentifizierungspflichtigen Softwareapplikation (11) auf dem mobilen Endgerät (10) durch den Nutzer;
- Übermitteln (91) einer Authentifizierungsanforderung von dem Applikationsserver (30) zu der gestarteten Softwareapplikation (11) nach dem Starten der Softwareapplikation (11) und Weiterleiten der Authentifizierungsanforderung von der gestarteten Softwareapplikation (11) an den Backendserver (20);
- Übermitteln einer Authentifizierungsanforderung von dem Backendserver (20) zu der gestarteten Softwareapplikation (11) und Übermitteln der Netzwerkauthentifikation des Nutzers von der gestarteten Softwareapplikation (11) zu dem Backendserver (20);
- Übermitteln (102) einer von dem Nutzer unter Meidung von Namenskonflikten frei gewählte Zugangsdaten umfassenden, der gestarteten Softwareapplikation (11) zugeordneten und auf dem Backendserver (20) gespeicherten Applikationsauthentifikation des Nutzers von dem Backendserver (20) des Drahtlosnetzwerks zu dem Applikationsserver (30).

2. Verfahren nach Anspruch 1, bei dem als das Authentifikationsmittel (13) eine in das mobile Endgerät (10) eingesetzte und einem Kommunikationsmodul (12) des mobilen Endgeräts (10) zugeordnete SIM-Karte des Drahtlosnetzwerks oder ein an das mobile Endgerät (10) angeschlossenes und dem Kommunikationsmodul (12) des mobilen Endgeräts (10) zugeordnetes Hardwaresicherheitsmodul des Drahtlosnetzwerks als das Authentifikationsmittel (13) verwendet wird.

3. Verfahren nach einem der Ansprüche 1 oder 2, bei dem die gestartete Softwareapplikation (11) die Netzwerkauthentifikation des Nutzers von dem Authentifikationsmittel (13) abfragt (105) und das Authentifikationsmittel (13) die Netzwerkauthentifikation des Nutzers liefert (106).

4. Verfahren nach einem der vorherigen Ansprüche, bei dem der Backendserver (20) die der gestarteten Softwareapplikation (11) zugeordnete Applikationsauthentifikation des Nutzers in einem Credential-Management-System (21) verwaltet und der Nutzer den Backendserver (20) einmalig autorisiert, die Applikationsauthentifikation zu dem Applikationsserver (30) zu übermitteln (102).

5. System (1) zum Authentifizieren eines Nutzers, welches ein Drahtlosnetzwerk, zumindest einen über das Drahtlosnetzwerk zugänglichen authentifizierungspflichtigen Applikationsserver (30), einen Backendserver (20) des Drahtlosnetzwerks, und zumindest ein mit dem Drahtlosnetzwerk verbindbares mobiles Endgerät (10) mit einem Kommunikationsmodul (12), einer gegenüber dem Applikationsserver (30) authentifizierungspflichtigen Softwareapplikation (11) und einem eine Netzwerkauthentifikation eines Nutzers bereitstellenden Authentifikationsmittel (13) umfasst, bei dem eine von dem Nutzer unter Meidung von Namenskonflikten frei gewählte Zugangsdaten umfassende und der zumindest einen authentifizierungspflichtigen Softwareapplikation (11) zugeordnete Applikationsauthentifikation des Nutzers auf dem Backendserver des Drahtlosnetzwerks gespeichert ist und welches konfiguriert ist, ein Verfahren (100) nach einem der Ansprüche 1 bis 4 zum Authentifizieren des Nutzers durchzuführen.

6. System nach Anspruch 5, bei dem das Authentifikationsmittel (13) dem Kommunikationsmodul (12) zugeordnet ist und eine in das mobile Endgerät (10) eingesetzte SIM-Karte des Drahtlosnetzwerks oder ein mit dem mobilen Endgerät (10) verbundenes Hardwaresicherheitsmodul des Drahtlosnetzwerks umfasst.

7. System nach einem der Ansprüche 5 oder 6, bei dem der Backendserver (20) ein Credential-Management-System (21) umfasst und die Applikationsauthentifikation in dem Credential-Management-System (21) gespeichert ist.

## Claims

1. Method (100) for authenticating a user, comprising the steps of:
- transmitting (99) a network authentication of a user provided by an authentication medium (13) from a mobile terminal (10) of the user to a back-end server (20) of a wireless network requiring authentication;
- connecting the mobile terminal (10) to the wireless network;
- starting, by the user, of a software application (11) on the mobile terminal (10) that requires authentication with respect to an application server (30) accessible via the wireless network;
- transmitting (91) an authentication request from the application server (30) to the started software application (11) after starting the software application (11) and forwarding the authentication request from the started software application (11) to the back-end server (20);
- transmitting an authentication request from the back-end server (20) to the started software application (11) and transmitting the network authentication of the user from the started software application (11) to the back-end server (20);
- transmitting (102) an application authentication of the user from the back-end server (20) of the wireless network to the application server (30), which application authentication comprises access data that is freely selected by the user, avoids name conflicts, is assigned to the started software application (11) and is stored on the back-end server (20).

2. Method according to claim 1, in which, as the authentication medium (13), a SIM card of the wireless network inserted into the mobile terminal (10) and assigned to a communication module (12) of the mobile terminal (10), or a hardware security module of the wireless network connected to the mobile terminal (10) and assigned to the communication module (12) of the mobile terminal (10), is used as the authentication medium (13).

3. Method according to any of claims 1 or 2, in which the started software application (11) queries (105) the network authentication of the user from the authentication medium (13) and the authentication medium (13) supplies (106) the network authentication of the user.

4. Method according to any of the preceding claims, in which the back-end server (20) manages the application authentication of the user assigned to the started software application (11) in a credential management system (21) and the user authorises the back-end server (20) once to transmit (102) the application authentication to the application server (30).

5. System (1) for authenticating a user, comprising a wireless network, at least one application server (30) which requires authentication and is accessible via the wireless network, a back-end server (20) of the wireless network, and at least one mobile terminal (10) which can be connected to the wireless network and has a communication module (12), a software application (11) which requires authentication with respect to the application server (30), and an authentication medium (13) which provides network authentication of a user, in which an application authentication of the user which comprises access data freely selected by the user while avoiding name conflicts and is assigned to the at least one software application (11) requiring authentication is stored on the back-end server of the wireless network, which system is configured to perform a method (100) according to any of claims 1 to 4 for authenticating the user.

6. System according to claim 5, in which the authentication medium (13) is assigned to the communication module (12) and comprises a SIM card of the wireless network inserted into the mobile terminal (10) or a hardware security module of the wireless network connected to the mobile terminal (10).

7. System according to any of claims 5 or 6, in which the back-end server (20) comprises a credential management system (21) and the application authentication is stored in the credential management system (21).

## Revendications

1. Procédé (100) pour l'authentification d'un utilisateur, comprenant les étapes :
- de transmission (99) d'une authentification réseau d'un utilisateur fournie par un moyen d'authentification (13) d'un terminale mobile (10) de l'utilisateur à un serveur dorsal (20) d'un réseau sans fil dédié à l'authentification ;
- de liaison du terminal mobile (10) au réseau sans fil ;
- de démarrage d'une application logicielle (11) dédiée à l'authentification par rapport à un serveur d'application (30) accessible par l'intermédiaire du réseau sans fil sur le terminal mobile (10) par l'utilisateur ;
- de transmission (91) d'une demande d'authentification du serveur d'application (30) à l'application logicielle (11) démarrée après le démarrage de l'application logicielle (11) et de retransmission de la demande d'authentification de l'application logicielle (11) démarrée au serveur dorsal (20) ;
- de transmission d'une demande d'authentification du serveur dorsal (20) à l'application logicielle (11) démarrée et de transmission de l'authentification réseau de l'utilisateur de l'application logicielle (11) démarrée au serveur dorsal (20) ;
- de transmission (102) d'une authentification d'application de l'utilisateur comprenant des données d'accès choisies librement par l'utilisateur en évitant des conflits de noms, associée à l'application logicielle (11) démarrée et enregistrée sur le serveur dorsal (20) du serveur dorsal (20) du réseau sans fil au serveur d'applications (30).

2. Procédé selon la revendication 1, dans lequel en tant que moyen d'authentification (13) une carte SIM du réseau sans fil employée dans le terminal mobile (10) et associée à un module de communication (12) du terminal mobile (10) ou un module de sécurité matérielle du réseau sans fil connecté au terminal mobile (10) et associé au module de communication (12) du terminal mobile (10) est utilisé en tant que moyen d'authentification (13).

3. Procédé selon l'une quelconque des revendications 1 ou 2, dans lequel l'application logicielle (11) démarrée demande (105) l'authentification réseau de l'utilisateur par le moyen d'authentification (13) et le moyen d'authentification (13) délivre (106) l'authentification réseau de l'utilisateur.

4. Procédé selon l'une quelconque des revendications précédentes, dans lequel le serveur dorsal (20) administre l'authentification d'application de l'utilisateur associée à l'application logicielle (11) démarrée dans un système de gestion de références (21) et l'utilisateur autorise une seule fois le serveur dorsal (20) à transmettre (102) l'authentification d'application au serveur d'applications (30).

5. Système (1) pour l'authentification d'un utilisateur qui comprend un réseau sans fil, au moins un serveur d'applications (30) dédié à l'authentification accessible par l'intermédiaire du réseau sans fil, un serveur dorsal (20) du réseau sans fil et au moins un terminal mobile (10) qui peut être relié au réseau sans fil avec un module de communication (12), une application logicielle (11) dédiée à l'authentification par rapport au serveur d'application (30) et un moyen d'authentification (13) fournissant une authentification réseau d'un utilisateur, dans lequel une authentification d'application de l'utilisateur comprenant des données d'accès choisies librement par l'utilisateur en évitant des conflits de noms et associée à l'au moins une application logicielle (11) dédiée à l'authentification est enregistrée sur le serveur dorsal du réseau sans fil et lequel réseau est configuré pour exécuter un procédé (100) selon l'une quelconque des revendications 1 à 4 pour l'authentification de l'utilisateur.

6. Système selon la revendication 5, dans lequel le moyen d'authentification (13) est associé au module de communication (12) et comprend une carte SIM du réseau sans fil employée dans le terminal mobile (10) ou un module de sécurité matérielle du réseau sans fil relié au terminal mobile (10).

7. Système selon l'une quelconque des revendications 5 ou 6, dans lequel le serveur dorsal (20) comprend un système de gestion de références (21) et l'authentification d'application est enregistrée dans le système de gestion de références (21).
